# EUROPEAN PATENT SPECIFICATION

(11) **EP 3 068 233 B1**
(45) Date of publication and mention of the grant of the patent: **26.12.2018**
(21) Application number: 14861201.3
(22) Date of filing: 10.11.2014
(51) Int. Cl.: A23D 9/00, A23D 9/04, C11C 3/10, A23D 9/02, A23G 1/36

(54) **COCOA BUTTER STABILIZING VEGETABLE FAT COMPOSITION**
PFLANZENFETTZUSAMMENSETZUNG ZUR STABILISIERUNG VON KAKAOBUTTER
COMPOSITION DE GRAISSE VÉGÉTALE STABILISANT LE BEURRE DE CACAO

(30) Priority: 15.11.2013 SE 1351352
(43) Date of publication of application: 21.09.2016
(73) Proprietor: AAK AB (publ), 215 32 Malmö (SE)
(72) Inventor: JUUL, Bjarne, DK-8270 HØJBJERG (DK)
(74) Representative: Patentgruppen A/S
(86) International application number: PCT/SE2014/051331
(87) International publication number: WO 2015/072913

(56) References cited:
- EP-A1- 2 636 313
- WO-A1-95/07620
- WO-A1-2006/037341
- WO-A1-2011/161213
- US-A1- 2013 078 359

## Description

### FIELD OF THE INVENTION

The invention relates to the field of vegetable fats.
In particular the invention relates to cocoa butter stabilizing vegetable fat compositions having improved properties. The invention also relates to spreadable fat products comprising such cocoa butter stabilizing vegetable fat compositions.

### BACKGROUND

Spreadable fat products such as, for example, Nutella® from Ferrero are soft at room temperature and therefore spreadable on a piece of bread. Such spreadable fat products may also be used as filling fats in, for example, filled chocolate.

Spreadable fat products typically comprise a vegetable fat composition together with fats of vegetable- and/or non-vegetable origin from other ingredients, for example hazel paste, milk powder and cocoa butter and may have a total fat content of around 25 - 35 % by weight of the product.

A standard vegetable fat composition for spreadable fat products may, for example, comprise 90 - 98% of liquid oils (sunflower, soya, and the like) and 2 - 10 % of a hard stock obtained from fully hardened oils or, for example, stearin fractions of palm oil, the hard stock having a melting point above 40 °C.

The spreadable fat products are handled and stored at different temperatures, typically from 5 °C in a cooling cabinet up to about 30 °C during the summer.

This large temperature span is a challenge and typical products are too hard to be directly spreadable from the cooling cabinet, and, on the other hand oil/solid separation may occur at higher storage temperatures.

Furthermore, unless the spreadable fat product is carefully treated in a sophisticated tempering process during production, the fat may often re-crystallize and small and visible fat crystals of varying texture may develop during the different temperature conditions experienced by the product.
This re-crystallization is very often experienced especially when the content of cocoa butter is too high in the product and/or if there are smaller amounts of chocolate, cocoa mass or rework from chocolate production in the recipe. The formation of such solid fat crystals is not at all attractive to the consumer. WO2011/161213 A1 relates to a texturizing fat composition based on vegetable oils and fats having different melting properties.

There is a need for more robust vegetable fat compositions ameliorating some of the drawbacks experienced with spreadable fat products.

### SUMMARY OF THE INVENTION

The invention pertains to a cocoa butter stabilizing vegetable fat composition comprising components A and B,
said component A being present in an amount of ≥50% (w/w) of said cocoa butter stabilizing fat composition,
and
said component B being present in an amount of 1-12% (w/w) of said cocoa butter stabilizing fat composition,
wherein said component A is an interesterified fat blend consisting of:
3-25% C16:0 + C18:0,
75-97% C18:1+C18:2, and
C18:0/C16:0 is >1.0,
StUU + UStU is > 8% (w/w), where StUU and UStU are triglycerides and where St stands for stearic acid and U stands for C18:1 and C18:2,
and component A having a slip melting point of < 25 °C,
and wherein component B is a hard stock consisting of:
   70-99 % C16:0 + C18:0,
   1-30% C18:1 + C18:2, and
   C18:0/C16:0 > 0.4.

In an embodiment of the invention U comprises at least 25% C18:1, such as at least 50% C18:1 or at least 85% C18:1.

In an embodiment of the invention the cocoa butter stabilizing vegetable fat composition comprises component B in amount of 2 - 10% (w/w) or 3 - 9% (w/w), such as 3.5 - 8% (w/w) or 4 - 7% (w/w).

In an embodiment of the invention the cocoa butter stabilizing vegetable fat composition comprises component A in an amount of 90 - 98%(w/w) or 91 - 97% (w/w), such as 92 - 96.5% (w/w) or 93 - 96% (w/w).

In an embodiment of the invention the cocoa butter stabilizing vegetable fat composition comprises component C, wherein component C is an oil with a maximum slip melting point of 20 °C, and wherein component C is present in the cocoa butter stabilizing vegetable fat composition in an amount of 1 - 38% (w/w) or 2 - 35% (w/w), such as 3 - 30% (w/w) or 4 - 25% (w/w).

In an embodiment of the invention component C comprises at least one selected from the group consisting of soybean oil, sunflower oil, rapeseed oil, corn oil, hazelnut oil, peanut oil, olein fractions of palm oil, olein fractions of shea oil and mixtures thereof.

In an embodiment of the invention component A of the cocoa butter stabilizing vegetable fat composition comprises C16:0 + C18:0 in an amount of 4-20% (w/w) and an amount of C18:1 + C18:2 of 80 - 96% (w/w), such as C16:0 + C18:0 in an amount of 5 - 15% (w/w) and an amount of C18:1 + C18:2 of 85 - 95%(w/w). In an embodiment of the invention component B of the cocoa butter stabilizing vegetable fat composition is selected from at least one of an interesterified hard stock and a non-interesterified hard stock.

The invention also pertains to a method for manufacturing a cocoa butter stabilizing vegetable fat composition comprising the steps of:
a) Providing a component A, wherein said component A is an interesterified fat blend consisting of:
   3-25% C16:0 + C18:0,
   75-97 % C18:1+C18:2, and
   C18:0/C16:0 is >1.0,
   StUU + UStU is > 8% (w/w), where StUU and UStU are triglycerides and where St stands for stearic acid and U stands for C18:1 and C18:2,
b) providing a component B, wherein component B is a hard stock consisting of:
   70-99 % C16:0 + C18:0,
   1-30% C18:1 + C18:2, and
   C18:0/C16:0 > 0.4,
c) optionally providing a component C, wherein component C is an oil with a slip melting point of ≤ 20 °C,
d) mixing components A, B and C to obtain a cocoa butter stabilizing vegetable fat comprising 50 - 99% (w/w%) of component A, and 1-12% (w/w%) of component B and 0 - 38% (w/w) of component C.

The invention further pertains to the use of the cocoa butter stabilizing vegetable fat composition according to the embodiments described above in a spreadable fat product.

The cocoa butter stabilizing vegetable fat composition is used in a spreadable fat product comprises cocoa butter in an amount of 1 - 25% by weight of the fat content of the spreadable fat product, such as 2 - 15% by weight of the fat content of the spreadable fat product.

In an embodiment of the invention the cocoa butter stabilizing vegetable fat composition is used in a chocolate spread or a filling fat.

Furthermore, the invention also pertains to a spreadable fat product comprising the cocoa butter stabilizing vegetable fat composition according to any of the embodiments described above or the cocoa butter stabilizing vegetable fat composition manufactured according to the described method.

According to embodiments of the invention the spreadable fat product is a chocolate spread or a filling fat.

### DETAILED DISCRIPTION

The invention is now described in further detail.

The cocoa butter stabilizing vegetable fat composition according to embodiments of the present invention can be used to improve the properties of a wide range of products.

For example, the cocoa butter stabilizing vegetable fat composition may be used in spreadable fat products, such as chocolate spreads, improving the stability and shelf-life of such chocolate spreads and consolidating good spreadability also at low, such as about 5°C, temperatures.

The cocoa butter stabilizing vegetable fat composition may also be used in other spreadable fat products, such as fillings, for example, for filled chocolate, providing a more cocoa butter tolerant soft filling and obtaining a good homogeneous consistency of the filling at all relevant temperatures, counteracting that the filling becomes too hard or too soft.

As used herein, the term "spreadable fat product" encompasses all fat products that are soft enough to be spreadable on a piece of bread at room temperature. For example, the spreadable fat product can be a chocolate spread, a filling or any other soft fat product comprising a vegetable fat composition. A spreadable fat product may also comprise non-vegetable fat, for example milk fat.

The invention pertains to a cocoa butter stabilizing vegetable fat composition comprising components A and B,
said component A being present in an amount of ≥50% (w/w) of said cocoa butter stabilizing fat composition,
and
said component B being present in an amount of 1-12% (w/w) of said cocoa butter stabilizing fat composition,
wherein said component A is an interesterified fat blend consisting of:
3-25% C16:0 + C18:0,
75-97 % C18:1+C18:2, and
C18:0/C16:0 is >1.0,
StUU + UStU is > 8% (w/w), where StUU and UStU are triglycerides and where St stands for stearic acid and U stands for C18:1 and C18:2,
and component A having a slip melting point of < 25 °C,
and wherein component B is a hard stock consisting of:
   70-99 % C16:0 + C18:0,
   1-30% C18:1 + C18:2, and
   C18:0/C16:0 > 0.4.

The StUU + UStU content is measured according to the method described in AOCS Ce5b-89 Mod.
The slip melting point is measured according to the method described in AOCS Cc3-25.
It has surprisingly been found that a vegetable fat composition according to the invention can be used to substantially stabilize a spreadable fat product with respect to forming crystals in the fat phase of the fat product with a high cocoa butter content at any temperatures between 5°C and 30°C°.
Further, there will be no liquid oil separation when stored at high temperatures.

The new vegetable fat compositions may be used in spreadable fat product formulations typically comprising 25 - 35% by weight of fat. The cocoa butter stabilizing vegetable fat compositions according to the present invention may be used as a part of the fat content of a fat product together with other fat sources like hazel pasta, whole milk powder, and cocoa butter.
Without the need for costly and difficult tempering procedures, the cocoa butter stabilizing vegetable fat composition described herein will greatly enhance the shelf life of a spreadable fat product under varying storage conditions.

For example, when stored at low temperatures, such as 5 °C in a refrigerator, the cocoa butter stabilizing vegetable fat composition may prevent the formation of fat crystals in a cocoa butter-containing spreadable fat product. This is particularly important, when the spreadable fat product is rich in cocoa butter. The product will still be soft enough to be spreadable on a piece of bread.
If the temperature gets high, the fat products comprising the cocoa butter stabilizing vegetable fat compositions described herein may retain a spreadable texture without the separation of liquid oil from solid fat.

Components A and B may be obtained from a variety of vegetable fat sources as long as the compositional limitations with respect to fatty acid content are fulfilled.

In an embodiment of the invention U comprises at least 25% C18:1, such as at least 50% C18:1 or at least 85% C18:1.

In an embodiment of the invention the cocoa butter stabilizing vegetable fat composition comprises component B in amount of 2 - 10% (w/w) or 3 - 9% (w/w), such as 3.5 - 8% (w/w) or 4 - 7% (w/w).

The hard stock component of the cocoa butter stabilizing vegetable fat composition is needed to provide a suitable solid fat content to the composition and to ensure that no oil separation happens at a high storage temperature.
The composition should always comprise at least 1% by weight of component B. Below 1%(w/w) of component B the composition gets somewhat soft and oil separation will happen, especially at high temperatures.
When component B is added in an amount above 12% by weight of the composition, the composition or fat products comprising the composition may no longer be easily spreadable at lower temperatures. The amount of component B in the composition may thus vary, partly depending on the particular use of the composition.

In embodiments of the invention, the cocoa butter stabilizing vegetable fat composition comprises 11%(w/w), 8%(w/w), 6%(w/w) or 1.5%(w/w) of component B.

In an embodiment of the invention the cocoa butter stabilizing vegetable fat composition comprises component A in an amount of 90 - 98%(w/w) or 91 - 97% (w/w), such as 92 - 96.5% (w/w) or 93 - 96% (w/w).

Component A is needed in an amount of at least 50% to obtain an advantageous fat. Depending on the particular use of the composition and other optional ingredients of the final fat, embodiments of the invention comprise 60%(w/w), 70%(w/w), 80%(w/w) or even 90%(w/w) of component A

In an embodiment of the cocoa butter stabilizing fat composition comprises component C, wherein component C is an oil with a maximum slip melting point of 20 °C, and wherein component C is present in the cocoa butter stabilizing vegetable fat composition in an amount of 1 - 38% (w/w), such as 2 - 35% (w/w), such as 3 - 30% (w/w) or 4 - 25% (w/w).

It is possible, without substantially compromising the beneficial effects of the cocoa butter stabilizing vegetable fat composition, to add component C, an oil having a slip melting point of < 20 °C to the composition in varying amounts.

The addition of component C may affect the texture of the fat composition but will not negatively affect the storage stability of products comprising the fat composition.
The possibility of adding component C to the cocoa butter stabilizing fat compositions may greatly enhances the flexibility of producing those compositions. For example, component C may arise from smaller amounts of rework in chocolate production. According to this embodiment this rework can be directly utilized in the fat composition, still obtaining the benefits with respect to shelf life etc.
Accordingly, when the cocoa butter stabilizing vegetable fat composition is diluted with a certain amount of oil C, further embodiments of the invention are obtained.

In an embodiment of the invention component C comprises at least one selected from the group consisting of soybean oil, sunflower oil, rapeseed oil, corn oil, hazelnut oil, peanut oil, and mixtures thereof.

In further embodiments, component C may also comprise olein fractions of palm oil, olein fractions of shea oil and mixtures thereof.

In an embodiment of the invention component A of the cocoa butter stabilizing vegetable fat composition comprises C16:0 + C18:0 in an amount of 4-20% (w/w) and an amount of C18:1 + C18:2 of 80 - 96% (w/w), such as C16:0 + C18:0 in an amount of 5 - 15% (w/w) and an amount of C18:1 + C18:2 of 85 - 95%(w/w).

In an embodiment of the invention component B of the cocoa butter stabilizing vegetable fat composition is selected from at least one of an interesterified hard stock and a non-interesterified hard stock.
The hard stock used for component B may be interesterified by standard methods or may be used without interesterification, or even a blend of intersterified hard stock and non-interesterified hard stock may be used for component B. Interesterification may be achieved by enzymatic interesterification as well as chemical interesterification.

The invention also pertains to a method for manufacturing a cocoa butter stabilizing vegetable fat composition comprising the steps of:
a) Providing a component A, wherein said component A is an interesterified fat blend consisting of:
   3-25% C16:0 + C18:0,
   75-99 % C18:1+C18:2, and
   C18:0/C16:0 is >1.0,
   StUU + UStU is > 8% (w/w), where StUU and UStU are triglycerides and where St stands for stearic acid and U stands for C18:1 and C18:2,
b) providing a component B, wherein component B is a hard stock consisting of:
   70-99 % C16:0 + C18:0,
   1-30% C18:1 + C18:2, and
   C18:0/C16:0 > 0.4,
c) optionally providing a component C, wherein component C is an oil with a slip melting point of ≤ 20 °C,
d) mixing components A, B and C to obtain a cocoa butter stabilizing vegetable fat comprising 50 - 99% (w/w%) of component A, and 1-12% (w/w%) of component B and 0 - 38% (w/w) of component C.

The invention further pertains to the use of the cocoa butter stabilizing vegetable fat composition according to the embodiments described above in a spreadable fat product.

The spreadable fat product, besides the inventive cocoa butter stabilizing vegetable fat composition according to the embodiments described above, comprises cocoa butter in an amount of 1 - 25% by weight of the fat content of the spreadable fat product, such as 2 - 15% by weight of the fat content of the spreadable fat product.

According to these embodiments it has been shown that the cocoa butter stabilizing vegetable fat composition tolerates substantial amounts of cocoa butter without jeopardizing the benefits obtained regarding no re-crystallization to a grainy structure at any storage temperature and shelf life.

In an embodiment of the invention the cocoa butter stabilizing vegetable fat composition is used in a chocolate spread or a filling fat.

Furthermore, the invention also pertains to a spreadable fat product comprising the cocoa butter stabilizing vegetable fat composition according to any of the embodiments described above or the cocoa butter stabilizing vegetable fat composition manufactured according to the described method.
According to embodiments of the invention the spreadable fat product is a chocolate spread or a filling fat.
A filling fat could, for example, comprise a wafer filling, a chocolate filling, filling in compound and the like.

Embodiments of the invention will now be described by specific examples.

### EXAMPLES

### Example 1

### Cocoa butter stabilizing vegetable fat compositions

Cocoa butter stabilizing vegetable fat compositions were prepared as follows:
A component A was prepared from shea olein (20%(w/w)) and high oleic sunflower oil (80%(w/w)) as an interesterified vegetable fat blend.

Component A was analyzed according to the method described in IUPAC 2.301 & 2.304.
13.0% C16:0 + C18:0, ratio C18:0/C16:0 being 2.2, and
76.5% (w/w) C18:1 + C18:2.

A component B was prepared from a hard stock containing shea oil and palm stearin.

Component B was analyzed according to the method described in IUPAC 2.301 & 2.304.
75.5% C16:0 + C18:0, ratio C18:0/C16:0 being 1.09, and
23.0% (w/w) C18:1 + C18:2 and

Cocoa butter stabilizing vegetable fat compositions I - III were prepared by blending components A and B in varying ratios and reference fat composition IV was prepared for comparison (See Table 1 below). All numbers given in Table 1 are in weight percentage (wt%).

**Table 1: Fat compositions for evaluation as cocoa butter stabilizing vegetable fat.**

| | Fat Composition for Vegetable Fat | | | |
|---|---|---|---|---|
| Component | I | II | III | IV Reference |
| A | 98 | 96 | 94 | 0 |
| B | 2 | 4 | 6 | 0 |
| C | 0 | 0 | 0 | 0 |
| Fully hardened rapeseed oil with high erucic acid content | 0 | 0 | 0 | 3 |
| Palm Stearin IV 16 | 0 | 0 | 0 | 4 |
| Sunflower oil | 0 | 0 | 0 | 93 |

The fat recipes for testing are given in Table 2 below. All numbers given are in weight percentage.

**Table 2: Spreadable fat product recipes comprising the cocoa butter stabilizing vegetable fat compositions from Table 1.**

| | **Spreadable Fat Product** | | | |
|---|---|---|---|---|
| **Ingredients** | **D** | **E** | **F** | **G** |
| Vegetable fat I | 21.50 | 0 | 0 | 0 |
| Vegetable fat II | 0 | 21.50 | 0 | 0 |
| Vegetable fat III | 0 | 0 | 21.50 | 0 |
| Vegetable fat IV Ref | 0 | 0 | 0 | 21.50 |
| Cocoa powder ( 10-12%) | 4.0 | 4.0 | 4.0 | 4.0 |
| Cocoa mass | 2.0 | 2.0 | 2.0 | 2.0 |
| Sugar | 50.5 | 50.5 | 50.5 | 50.5 |
| Skim milk powder | 8.6 | 8.6 | 8.6 | 8.6 |
| Hazel Pasta | 13.0 | 13.0 | 13.0 | 13.0 |
| Lecithin | 0.4 | 0.4 | 0.4 | 0.4 |
| | | | | |
| Total fat content | 31.60 | 31.60 | 31.60 | 31.60 |
| | | | | |
| Fat composition | D | E | F | G |
| Veg. fat | 68.0 | 68.0 | 68.0 | 68.0 |
| Cocoa butter | **4.90** | **4.90** | **4.90** | **4.90** |
| Hazel nut oil | 27.10 | 27.10 | 27.10 | 27.10 |
| Total | 100 | 100 | 100 | 100 |

Each of the recipes D, E, F and G were mixed in a Hobart mixer at 50°C until a suitable texture was obtained for each recipe.

The individual blends were then refined on a 200 mm Bühler refiner.

The individual masses were refined to 20 micron and then conched for 2 hours in a Hobart mixer with heat jacket at 50 °C.

The individual masses were cooled to 30°C and deposited into small 25 gram plastic cups which were then cooled in a 3-zone Blumen cooling tunnel for 30 min total:
10 min at 15°C then 10 min at 12°C and finally 10 min at 15°C .

All plastic cups were stored at 20°C for 24 hours before they were placed under isothermal conditions in different cooling or heating cabinets.

Re-crystallization/grainy structure and oil separation were tested for the different recipes by tasting and visible evaluation at each temperature, see Tables 3-6, according to the following evaluation scheme:
- - :: No re-crystallization at all, perfect
- +:: Slightly re-crystalized, a little bit sandy and few crystals on surface
- ++:: More crystals, more sandy and easy to taste
- +++:: Big crystals on surface of - and inside the spreadable fat product
- ++++:: Strong re-crystallization, very big fat crystals
- #:: Slight oil separation

**Table 3: Evaluation of storage stability for recipe D**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | # | # |

**Table 4: Evaluation of storage stability for recipe E**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

**Table 5: Evaluation of storage stability for recipe F**

| | 1 week | 4 weeks | 8 weeks | 12 weeks | 26weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

**Table 6: Evaluation of storage stability for recipe G**

| | 1 week | 4 weeks | 8 weeks | 12 weeks | 26 weeks |
|---|---|---|---|---|---|
| 5°C | + | ++ | ++ | +++ | ++++ |
| 10°C | - | + | + | ++ | ++ |
| 15°C | - | - | + | + | ++ |
| 20°C | - | - | - | - | - |
| 25°C | - | - | - | - | - |
| 30°C | - | - | - | - | - |

Comparing the results reflected in Tables 3-6 above it can be concluded that by using a vegetable fat as I or II or III in the spreadable fat product recipes it is possibly to keep a perfect product for more than 26 weeks.

The reference fat, IV, will start a re-crystallization process after some weeks at lower storage temperature and big unpleasant fat crystals develop in the spreadable fat product.

Vegetable fat I, used in recipe D does not provide the same stability at higher temperature as vegetable fat II and III, but is still acceptable.

Texture will be different for recipes D, E and F. D is softest and F is hardest but all are spreadable even at 5 °C.

Recipes E and G closely resemble each other with respect to texture.

### Example 2.

### Cocoa butter stabilizing vegetable fat compositions with varying cocoa butter content

A further cocoa butter stabilizing vegetable fat composition were prepared according to Table 7 below, components A, B and C referring to example 1. All numbers given are in weight percentage.

**Table 7: Fat composition for evaluations as cocoa butter stabilizing vegetable fat.**

| | Fat Composition for Vegetable Fat |
|---|---|
| Component | Vegetable fat V |
| A | 96.25 |
| B | 3.75 |
| C | 0 |

**Table 8: Spreadable fat product recipes comprising the cocoa butter stabilizing vegetable fat composition from Table 1 in varying amounts. All numbers given are in weight percentage.**

| | **Spreadable Fat Product Recipes** | |
|---|---|---|
| **Ingredients** | **H** | **J** |
| Vegetable fat V | 22.0 | 16.6 |
| Cocoa powder (10-12%) | 7.5 | 2.0 |
| Cocoa mass | 0.0 | 10.8 |
| Sugar | 48.5 | 48.5 |
| Skim milk powder | 9.0 | 9.1 |
| Hazel Pasta | 13.0 | 13.0 |
| Lecithin | 0.4 | 0.4 |
| | | |
| Total fat content | 31.60 | 31.60 |
| | | |

| Fat composition | H | J |
|---|---|---|
| Veg. fat | 70.0 | 52.8 |
| Cocoa butter | **2.6** | **19.9** |
| Hazel nut oil | 27.3 | 27.3 |
| Total | 100.0 | 100.0 |

Each of the recipes H and J were mixed in a Hobart mixer at 50°C until a suitable texture was obtained for each recipe.

The individual blends were then refined on a 200 mm Bühler refiner.

The individual masses were refined to 20 micron and then conched for 2 hours in a Hobart mixer with heat jacket at 50 °C.

The spreadable fat products H and J from Table 8 were mixed according to Table 9 to obtain mixtures with varying content of cocoa butter (CB).

**Table 9: Spreadable fat product recipes based on mixtures of the recipes in Table 8, the recipes varying in CB-content.**

| Recipe | K | L | M | N | O | P | Q |
|---|---|---|---|---|---|---|---|
| Spreadable fat product H | 500 g | 431 g | 287 g | 215 g | 143 g | 70 g | 0 g |
| Spread fat product J | 0 g | 69 g | 213 g | 285 g | 357 g | 430 g | 500 g |
| | | | | | | | |
| Cocoa butter content in final mixture % | **2.6** | **5.0** | **10.0** | **12.5** | **15.0** | **17.5** | **19.9** |

All individual mixtures K to Q were mixed for about ½ hour at 50 °C in a Hobart mixer until homogeneous and then all individual mixtures were cooled to 30 °C and deposited into small 25 gram plastic cups.

These were then cooled in a 3-zone Blumen cooling tunnel for 30 minutes total: 10 min. at 15 °C, then 10 min. at 12 °C and finally 10 min. at 15 °C.

All plastic cups were stored at 20°C for 24 hours before placed under isothermal conditions in different cooling or heating cabinets.

Re-crystallization and oil separation was tested by tasting and a visible evaluation at each temperature, see Tables 10-16, according to the evaluation scheme given in Example 1:

**Table 10: Evaluation of storage stability for recipe K with 2.6% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | # |

**Table 11: Evaluation of storage stability for recipe L with 5.0% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | # |

**Table 12: Evaluation of storage stability for recipe M with 10% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

**Table 13: Evaluation of storage stability for recipe N with 12.5% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

**Table 14: Evaluation of storage stability for recipe O with 15% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

**Table 15: Evaluation of storage stability for recipe P with 17.5% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | + | ++ | +++ |
| 20°C | - | - | - | + | ++ |
| 25°C | - | - | - | - | - |
| 30°C | - | - | - | - | - |

**Table 16: Evaluation of storage stability for recipe Q with 19.9% CB.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | + | +++ | +++ | ++++ | ++++ |
| 20°C | - | + | ++ | ++ | ++ |
| 25°C | - | - | - | - | - |
| 30°C | - | - | - | - | - |

Comparing recipe K to Q with a cocoa butter content from 2,6% to 19,9% ,it can be concluded that by using a cocoa butter stabilizing vegetable fat as V it is possibly to keep a perfect spreadable fat product for more than 26 weeks under any of the applied storage conditions up to a CB-content of about 15% in the recipe.

Higher CB content will effect some re-crystallization at a storage temperature around 15 °C and 20 °C but not if the spreadable fat products are kept at lower temperatures like 5C and 10C or higher temperature like 25C to 30C.
In this respect, even the recipes P and Q, Tables 15 and 16, do still perform favorably when compared to comparative recipe G, Table 6, Recipe G only comprising 4.9% CB.

Texture will be different between all recipes, as more CB increases hardness but all recipes are still spreadable at 5 °C.

### Example 3.

### Cocoa butter stabilizing vegetable fat compositions based on all three components A, B and C

A further cocoa butter stabilizing vegetable fat composition were prepared according to Table 17 below, components A, B and C referring to example 1. All numbers given are in weight percentage.

**Table 17: Fat composition for evaluations as cocoa butter stabilizing vegetable fat. Component C is in this example Sunflower oil.**

| | | |
|---|---|---|
| | Fat Composition for Vegetable Fats | |
| Component | V | VI |
| A | 96.25 | 76,25 |
| B | 3.75 | 3,75 |
| C | 0 | 20,00 |

**Table 18: Spreadable fat product recipes comprising the cocoa butter stabilizing vegetable fat composition from Table 17. All numbers given are in weight percentage.**

| | **Spreadable Fat Product Recipes** | |
|---|---|---|
| **Ingredients** | **R** | **S** |
| Vegetable fat V | 21,5 | 0,0 |
| Vegetable fat VI | 0,0 | 28,1 |
| Cocoa powder (10-12%) | 4,0 | 4,0 |
| Cocoa mass | 2.0 | 2.0 |
| Sugar | 50,5 | 53,9 |
| Skim milk powder | 8,6 | 8,6 |
| Hazel Pasta | 13.0 | 3.0 |
| Lecithin | 0.4 | 0.4 |
| | | |
| Total fat content | 31.60 | 31.60 |
| | | |

| Fat composition | **R** | **S** |
|---|---|---|
| Veg. fat | 68,0 | 88,9 |
| Cocoa butter | **4,9** | **4,9** |
| Hazel nut oil | 27,10 | 6,2 |
| Total | 100.0 | 100.0 |

Each of the recipes R and S were mixed in a Hobart mixer at 50°C until a suitable texture was obtained for each recipe.

The individual blends were then refined on a 200 mm Bühler refiner.

The individual masses were refined to 20 micron and then conched for 2 hours in a Hobart mixer with heat jacket at 50 °C.

The individual masses, R and S, were cooled to 30°C and deposited into small 25 gram plastic cups which were then cooled in a 3-zone Blumen cooling tunnel for 30 min total:
10 min at 15°C then 10 min at 12°C and finally 10 min at 15°C .

All plastic cups were stored at 20°C for 24 hours before they were placed under isothermal conditions in different cooling or heating cabinets.

Re-crystallization and oil separation was tested by tasting and a visible evaluation at each temperature, see Tables 19 & 20, according to the evaluation scheme given in Example 1:

**Table 19: Evaluation of storage stability for recipe R with 4,9% CB and 0% component C**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

**Table 20: Evaluation of storage stability for recipe S with 4.9% CB and 20% Component C.**

| | 1 week | 4 weeks | 8 weeks | 12 weeks | 26 weeks |
|---|---|---|---|---|---|
| 5°C | - | - | - | - | - |
| 10°C | - | - | - | - | - |
| 15°C | - | - | - | - | - |
| 20°C | - | - | - | - | - |
| 25°C | - | - | - | - | - |
| 30°C | - | - | - | - | - |

Comparing recipe R & S, it can be concluded that it is possible to make a cocoa butter stabilizing vegetable fat providing similar optimal storage stability, both with and without component C.

## Claims

1. A cocoa butter stabilizing vegetable fat composition comprising components A and B,
said component A being present in an amount of ≥50% (w/w) of said cocoa butter stabilizing fat composition,
and
said component B being present in an amount of 1-12% (w/w) of said cocoa butter stabilizing fat composition,
wherein said component A is an interesterified fat blend consisting of:
3-25% C16:0 + C18:0,
75-97 % C18:1+C18:2, and
C18:0/C16:0 is >1.0,
StUU + UStU is > 8% (w/w), where StUU and UStU are triglycerides and where St stands for stearic acid and U stands for C18:1 and C18:2,
and component A having a slip melting point of < 25 °C, and wherein component B is a hard stock consisting of:
70-99 % C16:0 + C18:0,
1-30% C18:1 + C18:2, and
C18:0/C16:0 > 0.4.

2. The cocoa butter stabilizing vegetable fat composition according to claim 1, wherein U comprises at least 25% C18:1, such as at least 50% C18:1 or at least 85% C18:1.

3. The cocoa butter stabilizing vegetable fat composition according to any of the claims 1 - 2, comprising component B in amount of 2 - 10% (w/w) or 3 - 9% (w/w), such as 3.5 - 8% (w/w) or 4 - 7% (w/w).

4. The cocoa butter stabilizing vegetable fat composition according to any of the claims 1 - 3, comprising component A in an amount of 90 - 98%(w/w) or 91 - 97% (w/w), such as 92 - 96.5% (w/w) or 93 - 96% (w/w).

5. The cocoa butter stabilizing vegetable fat composition according to any of the claims 1 - 4 further comprising component C, wherein component C is an oil with a maximum slip melting point of 20 °C, and wherein component C is present in the cocoa butter stabilizing vegetable fat- composition in an amount of 1 - 38% (w/w) or 2 - 35% (w/w), such as 3 - 30% (w/w) or 4 - 25% (w/w).

6. The cocoa butter stabilizing vegetable fat composition according to claim 5, wherein component C comprises at least one selected from the group consisting of soybean oil, sunflower oil, rapeseed oil, corn oil, hazelnut oil, peanut oil, and mixtures thereof.

7. The cocoa butter stabilizing vegetable fat composition according to any of the claims 1 - 6, wherein component A comprises C16:0 + C18:0 in an amount of 4-20% (w/w) and an amount of C18:1 + C18:2 of 80 - 96% (w/w), such as C16:0 + C18:0 in an amount of 5 - 15% (w/w) and an amount of C18:1 + C18:2 of 85 - 95%(w/w).

8. The cocoa butter stabilizing vegetable fat composition according to any of the claims 1 - 7, wherein component B is selected from at least one of an interesterified hard stock and a non-interesterified hard stock.

9. Method for manufacturing a cocoa butter stabilizing vegetable fat composition according to any of the claims 1 - 8, comprising the steps of:
a) Providing a component A, wherein said component A is an interesterified fat blend consisting of:
3-25% C16:0 + C18:0,
75-99 % C18:1+C18:2, and
C18:0/C16:0 is >1.0,
StUU + UStU is > 8% (w/w), where StUU and UStU are triglycerides and where St stands for stearic acid and U stands for C18:1 and C18:2,
b) providing a component B, wherein component B is a hard stock consisting of:
70-99 % C16:0 + C18:0,
1-30% C18:1 + C18:2, and
C18:0/C16:0 > 0.4,
c) optionally providing a component C, wherein component C is an oil with a slip melting point of ≤ 20 °C,
d) mixing components A, B and C to obtain a cocoa butter stabilizing vegetable fat comprising 50 - 99% (w/w%) of component A, and 1-12% (w/w%) of component B and 0 - 38% (w/w) of component C.

10. Use of the cocoa butter stabilizing vegetable fat composition according to any of the claims 1-8 in a spreadable fat product.

11. The use according to claim 10, wherein the spreadable fat product comprises cocoa butter in an amount of 1 - 25% by weight of the fat content of the spreadable fat product, such as 2 - 15% by weight of the fat content of the spreadable fat product.

12. The use according to any of the claims 10-11, wherein said spreadable fat product is a chocolate spread or a filling fat.

13. A spreadable fat product comprising the cocoa butter stabilizing vegetable fat composition according to any of the claims 1 - 8 or the cocoa butter stabilizing vegetable fat composition manufactured according to the method of claim 9, wherein the spreadable fat product further comprises cocoa butter in an amount of 1 - 25% by weight of the fat content of the spreadable fat product.

14. The spreadable fat product according to claim 13, being a chocolate spread or a filling fat.

## Patentansprüche

1. Kakaobutter stabilisierende Pflanzenfettzusammensetzung, die Komponenten A und B umfasst,
wobei die Komponente A in einem Anteil von ≥ 50% (Gew./Gew.) der Kakaobutter stabilisierenden Fettzusammensetzung vorhanden ist,
und
die Komponente B in einem Anteil von 1-12% (Gew./Gew.) der Kakaobutter stabilisierenden Fettzusammensetzung vorhanden ist,
wobei die Komponente A ein Gemisch von umgeesterten Fetten ist, das aus Folgendem besteht:
3-25% C16:0 + C18:0,
75-97% C18:1 + C18:2, und
C18:0 / C16:0 > 1,0 ist,
StUU + UStU > 8% (Gew./Gew.) ist, wobei StUU und UStU Triglyceride sind und wobei St für Stearinsäure steht und U für C18:1 und C18:2 steht,
und wobei die Komponente A einen Steig- oder Fließschmelzpunkt von < 25°C hat und wobei die Komponente B ein fester oder 'Hard Stock'-Bestandteil ist, der aus Folgendem besteht:
70-99% C16:0 + C18:0,
1-30% C18:1 + C18:2, und
C18:0 / C16:0 > 0,4.

2. Kakaobutter stabilisierende Pflanzenfettzusammensetzung nach Anspruch 1, wobei U wenigstens 25% C18:1 umfasst, wie etwa wenigstens 50% C18:1 oder wenigstens 85% C18:1.

3. Kakaobutter stabilisierende Pflanzenfettzusammensetzung nach einem der Ansprüche 1 bis 2, die die Komponente B in einem Anteil von 2-10% (Gew./Gew.) oder 3-9% (Gew./Gew.) umfasst, wie etwa 3,5-8% (Gew./Gew.) oder 4-7% (Gew./Gew.).

4. Kakaobutter stabilisierende Pflanzenfettzusammensetzung nach einem der Ansprüche 1 bis 3, die die Komponente A in einem Anteil von 90-98% (Gew./Gew.) oder 91-97% (Gew./Gew.) umfasst, wie etwa 92-96,5% (Gew./Gew.) oder 93-96% (Gew./Gew.).

5. Kakaobutter stabilisierende Pflanzenfettzusammensetzung nach einem der Ansprüche 1 bis 4, die außerdem eine Komponente C umfasst, wobei die Komponente C ein Öl mit einem maximalen Steig- oder Fließschmelzpunkt von 20°C ist und wobei die Komponente C in der Kakaobutter stabilisierenden Pflanzenfettzusammensetzung in einem Anteil von 1-38% (Gew./Gew.) oder 2-35% (Gew./Gew.) vorhanden ist, wie etwa 3-30% (Gew./Gew.) oder 4-25% (Gew./Gew.).

6. Kakaobutter stabilisierende Pflanzenfettzusammensetzung nach Anspruch 5, wobei die Komponente C wenigstens eines umfasst, das aus der aus Sojabohnenöl, Sonnenblumenöl, Rapsöl, Maiskeimöl, Haselnussöl, Erdnussöl und Mischungen davon bestehenden Gruppe ausgewählt ist.

7. Kakaobutter stabilisierende Pflanzenfettzusammensetzung nach einem der Ansprüche 1 bis 6, wobei die Komponente A C16:0 + C18:0 in einem Anteil von 4-20% (Gew./Gew.) und einen Anteil von C18:1 + C18:2 von 80-96% (Gew./Gew.), wie etwa C16:0 + C18:0 in einem Anteil von 5-15% (Gew./Gew.) und einen Anteil von C18:1 + C18:2 von 85-95% (Gew./Gew.), umfasst.

8. Kakaobutter stabilisierende Pflanzenfettzusammensetzung nach einem der Ansprüche 1 bis 7, wobei die Komponente B aus wenigstens einem von einem umgeesterten festen oder 'Hard Stock'-Bestandteil und einem nicht-umgeesterten festen oder 'Hard Stock'-Bestandteil ausgewählt ist.

9. Verfahren zur Herstellung einer Kakaobutter stabilisierenden Pflanzenfettzusammensetzung nach einem der Ansprüche 1 bis 8, welches die folgenden Schritte umfasst:
a) Bereitstellen einer Komponente A, wobei die Komponente A ein Gemisch von umgeesterten Fetten ist, das aus Folgendem besteht:
3-25% C16:0 + C18:0,
75-99% C18:1 + C18:2, und
C18:0 / C16:0 > 1.0 ist,
StUU + UStU > 8% (Gew./Gew.) ist, wobei StUU und UStU Triglyceride sind und wobei St für Stearinsäure steht und U für C18:1 und C18:2 steht,
b) Bereitstellen einer Komponente B, wobei die Komponente B ein fester oder 'Hard Stock'-Bestandteil ist, der aus Folgendem besteht:
70-99% C16:0 + C18:0,
1-30% C18:1 + C18:2, und
C18:0 / C16:0 > 0,4,
c) optional das Bereitstellen einer Komponente C, wobei die Komponente C ein Öl mit einem Steig- oder Fließschmelzpunkt von ≤ 20°C ist,
d) Mischen der Komponenten A, B und C, um ein Kakaobutter stabilisierendes Pflanzenfett zu erhalten, das 50-99% (Gew./Gew.%) von Komponente A und 1-12% (Gew./Gew.%) von Komponente B und 0-38% (Gew./Gew.) von Komponente C umfasst.

10. Verwendung der Kakaobutter stabilisierenden Pflanzenfettzusammensetzung nach einem der Ansprüche 1 bis 8 in einem Streichfetterzeugnis.

11. Verwendung nach Anspruch 10, wobei das Streichfetterzeugnis Kakaobutter in einem Anteil von 1-25% bezogen auf das Gewicht des Fettgehalts des Streichfetterzeugnisses umfasst, wie etwa 2-15% bezogen auf das Gewicht des Fettgehalts des Streichfetterzeugnisses.

12. Verwendung nach einem der Ansprüche 10 bis 11, wobei das Streichfetterzeugnis ein Schokoladenaufstrich oder ein Füllungsfett ist.

13. Streichfetterzeugnis, das die Kakaobutter stabilisierende Pflanzenfettzusammensetzung nach einem der Ansprüche 1 bis 8 oder die Kakaobutter stabilisierende Pflanzenfettzusammensetzung, die entsprechend dem Verfahren nach Anspruch 9 hergestellt ist, umfasst, wobei das Streichfetterzeugnis außerdem Kakaobutter in einem Anteil von 1-25% bezogen auf das Gewicht des Fettgehalts des Streichfetterzeugnisses umfasst.

14. Streichfetterzeugnis nach Anspruch 13, das ein Schokoladenaufstrich oder ein Füllungsfett ist.

## Revendications

1. Composition de graisses végétales stabilisant le beurre de cacao comprenant des composants A et B,
ledit composant A étant présent en une quantité de ≥ 50 % (p/p) de ladite composition de graisses stabilisant le beurre de cacao,
et
ledit composant B étant présent en une quantité de 1-12 % (p/p) de ladite composition de graisses stabilisant le beurre de cacao,
où ledit composant A est un mélange de graisses interestérifiées consistant en:
3-25 % de C16:0 + C18:0,
75-97 % de C18:1 + C18:2, et
C18:0/C16:0 est > 1,0,
StUU + UStU est > 8 % (p/p), où StUU et UStU sont des triglycérides et où St représente l'acide stéarique et U représente C18:1 et C18:2,
et le composant A ayant un point de fusion de glissement de < 25°C, et où le composant B est une matière première dure consistant en:
70-99 % de C16:0 + C18:0,
1-30 % de C18:1 + C18:2, et
C18:0/C16:0 > 0,4.

2. Composition de graisses végétales stabilisant le beurre de cacao selon la revendication 1, où U comprend au moins 25 % de C18:1, comme au moins 50 % de C18:1 ou aumoins 85 % de C18:1.

3. Composition de graisses végétales stabilisant le beurre de cacao selon l'une quelconque des revendications 1-2, comprenant le composant B en une quantité de 2-10 % (p/p) ou 3-9 % (p/p), comme 3,5-8 % (p/p) ou 4-7 % (p/p).

4. Composition de graisses végétales stabilisant le beurre de cacao selon l'une quelconque des revendications 1-3, comprenant le composant A en une quantité de 90-98 % (p/p) ou 91-97 % (p/p), comme 92-96,5% (p/p) ou 93-96 % (p/p).

5. Composition de graisses végétales stabilisant le beurre de cacao selon l'une quelconque des revendications 1-4 comprenant en outre un composant C, où le composant C est une huile ayant un point de fusion de glissement maximal de 20°C, et où le composant C est présent dans la composition de graisses végétales stabilisant le beurre de cacao en une quantité de 1-38 % (p/p) ou 2-35 % (p/p), comme 3-30 % (p/p) ou 4-25 % (p/p).

6. Composition de graisses végétales stabilisant le beurre de cacao selon la revendication 5, où le composant C comprend au moins une choisie dans le groupe consistant en l'huile de soja, l'huile de tournesol, l'huile de colza, l'huile de maïs, l'huile de noisette, l'huile d'arachide et leurs mélanges.

7. Composition de graisses végétales stabilisant le beurre de cacao selon l'une quelconque des revendications 1-6, où le composant A comprend C16:0 + C18:0 en une quantité de 4-20 % (p/p) et une quantité de C18:1 + C18:2 de 80-96 % (p/p), comme C16:0 + C18:0 en une quantité de 5-15 % (p/p) et une quantité de C18:1 + C18:2 de 85-95 % (p/p).

8. Composition de graisses végétales stabilisant le beurre de cacao selon l'une quelconque des revendications 1-7, où le composant B est choisi parmi au moins une d'une matière première dure interestérifiée et d'une matière première dure non interestérifiée.

9. Procédé pour fabriquer une composition de graisses végétales stabilisant le beurre de cacao selon l'une quelconque des revendications 1-8, comprenant les étapes de:
a) fourniture d'un composant A, où ledit composant A est un mélange de graisses interestérifiées consistant en:
3-25 % de C16:0 + C18:0,
75-99 % de C18:1 + C18:2, et
C18:0/C16:0 est > 1,0,
StUU + UStU est > 8 % (p/p), où StUU et UStU sont des triglycérides et où St représente l'acide stéarique et U représente C18:1 et C18:2,
b) fourniture d'un composant B, où le composant B est une matière première dure consistant en:
70-99 % de C16:0 + C18:0,
1-30 % de C18:1 + C18:2, et
C18:0/C16:0 > 0,4,
c) éventuellement fourniture d'un composant C, où le composant C est une huile ayant un point de fusion de glissement de ≤ 20°C,
d) mélange des composants A, B et C pour obtenir une graisse végétale stabilisant le beurre de cacao comprenant 50-99 % (% p/p) de composant A, et 1-12 % (% p/p) de composant B et 0-38 % (p/p) de composant C.

10. Utilisation de la composition de graisses végétales stabilisant le beurre de cacao selon l'une quelconque des revendications 1-8 dans un produit à base de graisse pouvant être étalé.

11. Utilisation selon la revendication 10, où le produit à base de graisse pouvant être étalé comprend du beurre de cacao en une quantité de 1-25 % en poids de la teneur en graisse du produit à base de graisse pouvant être étalé, comme 2-15 % en poids de la teneur en graisse du produit à base de graisse pouvant être étalé.

12. Utilisation selon l'une quelconque des revendications 10-11, où ledit produit à base de graisse pouvant être étalé est un produit pouvant être étalé au chocolat ou une graisse de garnissage.

13. Produit à base de graisse pouvant être étalé comprenant la composition de graisses végétales stabilisant le beurre de cacao selon l'une quelconque des revendications 1-8 ou la composition de graisses végétales stabilisant le beurre de cacao fabriquée selon le procédé de la revendication 9, où le produit à base de graisse pouvant être étalé comprend en outre du beurre de cacao en une quantité de 1-25 % en poids de la teneur en graisse du produit à base de graisse pouvant être étalé.

14. Produit à base de graisse pouvant être étalé selon la revendication 13, qui est un produit pouvant être étalé au chocolat ou une graisse de garnissage.
